# EUROPÄISCHE PATENTSCHRIFT

(11) **EP 2 368 518 B1**
(45) Veröffentlichungstag und Bekanntmachung des Hinweises auf die Patenterteilung: **02.03.2016**
(21) Anmeldenummer: 10003184.8
(22) Anmeldetag: 25.03.2010
(51) Int. Cl.: A61C 8/00

(54) **Abformkappe für ein Dentalimplantat**
Impression coping for a dental implant
Transfert pour implant dentaire

(43) Veröffentlichungstag der Anmeldung: 28.09.2011
(73) Patentinhaber: Straumann Holding AG, 4002 Basel (CH)
(72) Erfinder: Streff, Patrick, 4002 Basel (CH)
(74) Vertreter: Schaad, Balass, Menzl & Partner AG

(56) Entgegenhaltungen:
- EP-A1- 1 252 866
- WO-A1-02/17814
- WO-A1-97/28755
- WO-A1-98/52490
- WO-A2-2009/024838

## Beschreibung

Die vorliegende Erfindung betrifft eine Abformkappe für ein Dentalimplantat gemäss dem Oberbegriff des Anspruchs 1 sowie die Verwendung der Abformkappe für das "Open tray"- und/oder das "Closed tray"-Abformen eines Referenzimplantats gemäss Anspruch 13.

Im Gebiet der oralen Implantologie ist die exakte Positionierung des Dentalimplantats im Kieferknochen des Patienten von entscheidender Bedeutung für den Behandlungserfolg. Dies trifft insbesondere dann zu, wenn das Angebot an vorhandenem Knochen zur Verankerung des Dentalimplantats beschränkt ist.

Dem Problem der exakten Positionierung kann etwa dadurch begegnet werden, dass eine Bohrschablone verwendet wird, deren mindestens eine Öffnung als Bohrerführung dient und die Lage des jeweiligen Dentalimplantats bzw. dessen Bohrlochs exakt vorgibt. Eine entsprechende Technologie wird etwa in der WO 03/003933 beschrieben, welche sich auf die Herstellung einer mit Zahnprothesen versehenen Superstruktur bezieht. Konkret umfasst das betreffende Verfahren die Schritte, dass ein Referenzelement (im folgenden auch "Referenzimplantat" genannt) im Kieferknochen fixiert wird, worauf der Kieferknochen mit dem darin fixierten Referenzelement abgeformt wird. Anhand der Abformung wird dann ein provisorisches Modell der Superstruktur angefertigt. Das Modell wird daraufhin auf die Referenzelemente aufgesetzt, worauf ein Computertomogramm des Kiefers und des Modells angefertigt wird. Die anhand des Computertomogramms erhaltene Information bezüglich der anatomischen Strukturen im Kiefer, wie etwa der Lage von Nervensträngen und Blutgefässen, in räumlicher Relation zur Superstruktur erlaubt es, die jeweilige Position der Bohrlöcher für die Implantate in geeigneter Weise auszuwählen. Auf der Grundlage der ausgewählten Positionen wird dann eine Bohrschablone angefertigt, die Mittel zur Fixierung an den Referenzelementen aufweist und deren Öffnungen die Position des jeweiligen Bohrlochs exakt vorgeben.

Ein Schritt von zentraler Bedeutung ist dabei die Abformung des Kiefers mit den Referenzelementen, die als Grundlage für die Anfertigung des provisorischen Modells in erster Linie und der Bohrschablone in zweiter Linie dient.

Abformverfahren für Dentalimplantate wurden im Stand der Technik mehrfach beschrieben, so etwa in Schroeder, A. et al., "Orale Implantologie", 2. Auflage, Georg Thieme Verlag Stuttgart, 1994, S. 202 ff. Weiter wird etwa auf EP-A-1274365, EP-A-1274366, WO2007/093648, US-B-6,213,773, US-B-6,379,148, US-B-6,524,106, US-B-6,508,650, EP-A-0747017 und US-B-6,045,361 verwiesen. Für die Abformung von im Kieferknochen verankerten Referenzelementen kommen prinzipiell analoge Abformverfahren in Frage.

In der Regel wird in den gängigen Verfahren die Abformung mittels eines Abformpfostens durchgeführt, der üblicherweise eine Abformkappe und ein mit dieser verbundenes, geeignetes Befestigungselement zur Befestigung der Abformkappe am Dentalimplantat aufweist. Unter Verwendung eines Abformlöffels wird der Raum um den Abformpfosten und die benachbarten Gewebestrukturen im Mundbereich des Patienten mit einer anfänglich plastisch verformbaren, aushärtbaren Abformmasse ausgefüllt. Die nach der Aushärtung aus dem Mundbereich des Patienten entfernte Abformmasse bildet ein Negativmodell, anhand welcher das provisorische Modell angefertigt werden kann.

Bei den gängigen Abformverfahren wird zwischen dem sogenannten "Open tray"- und dem sogenannten "Closed tray"-Abformen unterschieden. Die beiden Abformverfahren werden etwa in US-B-7,066,736 beschrieben.

Beim "Open tray"-Abformen wird die mittels des Befestigungselements bewerkstelligte Verbindung zwischen der Abformkappe und dem Dentalimplantat vor der Entfernung der Abformmasse aus dem Mundbereich des Patienten aktiv gelöst. Da das Befestigungselement in der Regel in Form einer Schraube vorliegt, weist der Abformlöffel in einem entsprechenden Bereich eine Aussparung auf, durch die die Schraube - etwa mit einem Schraubenzieher - gegriffen und die Schraubverbindung somit aktiv gelöst werden kann.

Beim Entfernen des Abformlöffels verbleibt beim "Open tray"-Abformen die Abformkappe in der Abformmasse. Dies erlaubt es, die Lage der Dentalimplantate bezüglich der räumlichen Situation im Mundbereich des Patienten exakt auf das Negativmodell zu übertragen. Abformpfosten, die für ein "Open tray"-Abformen verwendet werden können, werden etwa in US-B-5,213,502 und in US-A-2006/0121416 beschrieben.

Im Gegensatz dazu wird beim "Closed tray"-Abformen die Verbindung zwischen Abformkappe und Dentalimplantat vor der Entfernung der Abformmasse nicht aktiv gelöst, sodass eine entsprechende Öffnung im Abformlöffel nicht vorgesehen sein muss. Dabei ist denkbar, dass die Abformkappe am Dentalimplantat verbleibt, wie etwa in WO 2004/039280 beschrieben. In diesem Fall wird die Abformkappe in der Regel in einem weiteren Schritt in die ausgehärtete Abformmasse, also das Negativmodell, wieder eingesetzt. Dies kann insbesondere dann, wenn beim Wiedereinsetzen der Abformkappe in das Negativmodell nicht die gebotene Sorgfalt angewendet wird, zu Ungenauigkeiten führen. Alternativ dazu kann die Abformkappe derart ausgestaltet sein, dass die Verbindung zwischen Abformkappe und Dentalimplantat beim Entfernen gelöst wird. Eine entsprechende Abformkappe wird etwa in US 6,382,977 offenbart.

Je nach vorliegender Situation im Mundraum des Patienten kann ein "Open tray"- oder ein "Closed tray"-Abformen angezeigt sein. Entsprechend kommen je nach gewählter Art der Abformung unterschiedliche Abformkappen zum Einsatz. Auf Grundlage dieses Umstands befassen sich etwa WO 00/02497 und WO 2004/039280 mit der Aufgabe, ein Abformungssystem zur Verfügung zu stellen, welches sowohl für das "Open tray"-Abformen als auch für das "Closed tray"-Abformen verwendet werden kann. Allerdings verbleibt gemäss den in diesen Druckschriften beschriebenen Systemen beim "Open tray"-Abformen die Abformkappe auf dem Dentalimplantat und nicht in der vom Kiefer entfernten Abformmasse, was die oben beschriebenen Probleme hinsichtlich der Genauigkeit der Übertragung mit sich bringen kann.

EP 1 252 866 A1 betrifft eine Anordnung für das Handling eines in Knochen einzusetzenden Implantats. Die Anordnung umfasst eine auf das Implantat lösbar aufsteckbare Übertragungskappe und einen am Implantat eingreifenden Adapter. Die Übertragungskappe weist ein zu einer Implantatschulter komplementäre Kontaktoberfläche, eine elastische Lippe, welche eine Schulterkante des Implantats unterfasst, sowie einen Axialdurchgang zum Durchtritt des Adapters zum Implantat auf. WO 2009/024838 A2 offenbart ein Hybrid-Zylindersystem mit einem Hybrid-Zylinder, welcher auf ein Abutment aufgesetzt werden soll. WO 02/17814 A1 bezieht sich auf eine Abformkappe mit einem proximalen Ende, welches eine Öffnung definiert. Das proximale Ende ist derart ausgestaltet, um eine korrespondierende Schulter eines Abutments mittels einer Schnappverbindung aufzunehmen. WO 97/28755 A1 offenbart ein Abdrucksystem mit einer Abdruckkappe, die einen Durchgangskanal, eine Kappenschulter und ein elastisches Schnappelement umfasst.

Aufgabe der vorliegenden Erfindung ist es, eine Abformkappe für Dentalimplantate, insbesondere Referenzimplantate zur Verfügung zu stellen, die sowohl bei der "Closed tray"-Abformung als auch bei der "Open tray"-Abformung eine exakte Übertragung der Position der Dentalimplantate gewährleistet.

Die erfindungsgemässe Aufgabe wird durch den Gegenstand des unabhängigen Anspruchs 1 gelöst. Bevorzugte Ausführungsformen sind in den abhängigen Ansprüchen definiert.

Gemäss der vorliegenden Erfindung weist die Abformkappe eine sich zwischen zwei Endbereichen der Abformkappe in Längsrichtung erstreckende Ausnehmung auf und ist somit im Wesentlichen hülsenförmig. Die Ausnehmung ist derart ausgestaltet, dass sie ein Befestigungselement aufnehmen kann, welches dazu bestimmt ist, die Abformkappe über einen ersten der beiden Endbereiche mit dem Dentalimplantat zu verbinden.

Der dem ersten Endbereich gegenüberliegende zweite Endbereich umfasst erfindungsgemäss ein Verbindungselement, welches derart ausgestaltet ist, um eine lösbare Schnappverbindung zwischen der Abformkappe und dem Dentalimplantat herzustellen.

Erfindungsgemäss weist die Abformkappe somit einen ersten Endbereich auf, über den die Abformkappe für eine "Open tray"-Abformung mit dem Dentalimplantat verbunden werden kann, und einen zweiten Endbereich, über den die Abformkappe für eine "Closed tray"-Abformung mit dem Dentalimplantat verbunden werden kann.

Aufgrund der erfindungsgemässen Ausgestaltung des Verbindungselements für die "Closed tray"-Abformung wird die Verbindung beim Überschreiten einer vorgegebenen Zugkraft gelöst. Dadurch ermöglicht es die erfindungsgemässe Abformkappe, dass auch beim "Closed tray"-Abformen durch die bei der Entfernung der Abformmasse auf die Abformkappe wirkende Zugkraft die Verbindung zwischen Dentalimplantat und Abformkappe gelöst wird und letztere somit in der Abformmasse verbleibt. Mithin gewährleistet die vorliegende Erfindung bei beiden Abformverfahren eine sehr genaue Übertragung der Lage des Dentalimplantats.

Gemäss einer bevorzugten Ausführungsform liegt das Verbindungselement in Form einer elastisch verformbaren Schnapplippe vor, welche in der Regel peripher an der Abformkappe bzw. deren zweitem Endbereich ausgeformt ist. Die Schnapplippe ist vorzugsweise derart ausgestaltet, um eine aussenseitige Schnappkante des Dentalimplantats zu hintergreifen. Dabei ist die Schnapplippe vorzugsweise radial umlaufend ausgebildet.

Beim Verbinden der Abformkappe mit dem Dentalimplantat für die "Closed tray"-Abformung wird die Schnapplippe elastisch soweit aufgeweitet, dass sie über die Schnappkante geschoben werden und diese hintergreifen kann. Die Verbindung wird dadurch gelöst, dass die Schnapplippe in entgegengesetzter Richtung über die Schnappkante geschoben wird, was beim "Closed tray"-Abformen dann der Fall ist, wenn die Abformmasse mit der darin eingebetteten Abformkappe vom Kiefer entfernt wird.

Alternativ zur beschriebenen Schnapplippe ist auch denkbar, dass das Verbindungselement elastisch verformbare Finger aufweist, die dazu bestimmt sind, in eine entsprechende Öffnung des Dentalimplantats einzugreifen und eine innenseitige Schnappkante zu hintergreifen. Weiter ist denkbar, dass das Verbindungselement eine Feder aufweist, mittels welcher die Schnappverbindung hergestellt wird.

Als Alternative zur beschriebenen "Closed tray"-Abformung wird die erfindungsgemäss ebenfalls mögliche "Open tray"-Abformung mittels eines zusätzlichen Befestigungselements bewerkstelligt. Im Allgemeinen weist die Abformkappe eine Anschlagsfläche auf, die derart ausgestaltet ist, um mit einer vorzugsweise gegengleich ausgebildeten Gegenanschlagsfläche des Befestigungselements zusammenzuwirken. Dies erlaubt es, während der Abformung einen festen Verbund zwischen Abformkappe und Dentalimplantat zu gewährleisten. In der Regel liegt das Befestigungselement in Form einer die Ausnehmung der Abformkappe mindestens teilweise durchgreifenden Schraube vor. Diese weist im Allgemeinen einen Kopfteil und einen Schaftteil mit einem Aussengewindeabschnitt auf, wobei das Aussengewinde der Schraube einem in der Regel in der koronalen Öffnung des Dentalimplantats ausgestalteten Innengewinde entspricht. Die Anschlagsfläche wird in dieser Ausführungsform in der Regel vom Kopfteil der Schraube gebildet.

Im Allgemeinen ist die Ausnehmung mindestens abschnittsweise im Wesentlichen zylinderförmig ausgestaltet. Insbesondere ist denkbar, dass in der Ausnehmung eine Einengung ausgebildet ist, die eine radial ins Innere der Ausnehmung ragende Schulterfläche bildet, welche als Anschlagsfläche für das Befestigungselement dient.

Vorzugsweise ist die radial ins Innere der Ausnehmung ragende Schulterfläche der Einengung konisch ausgebildet. Gemäss dieser Ausführungsform kann gewährleistet werden, dass zwischen Befestigungselement und Dentalimplantat möglichst wenig Spiel vorliegt, was im Sinne einer möglichst genauen Abformung ist. Im Übrigen wird die auf die Abformkappe wirkende Kraft in dieser Ausführungsform grossflächig verteilt.

Liegt das Befestigungselement wie oben beschrieben in Form einer Schraube vor, so kann durch die Einengung überdies ein wirksamer Verlierschutz zwischen Abformkappe und Schraube gewährleistet werden. Dies ist etwa dann der Fall, wenn nebst dem Aussendurchmesser des Kopfteils der Schraube auch der Aussendurchmesser des Aussengewindeabschnitts grösser ist als der Innendurchmesser der Einengung.

Im Hinblick auf die "Open tray"-Abformung weist die erfindungsgemässe Abformkappe den weiteren Vorteil auf, dass das Verbindungselement des zweiten, bei der beschriebenen Abformung freistehenden Endbereichs als Andockstelle für ein Aufsatzteil verwendet werden kann. Ein solches Aufsatzteil kann beispielsweise dazu bestimmt sein, die Ausnehmung auch an ihrem freien Ende abzuschliessen, wodurch verhindert werden kann, dass bei der Abformung die Abformmasse in die Ausnehmung eindringen kann.

In der Regel weisen beide Endbereiche der Abformkappe eine Auflagefläche auf, die derart ausgestaltet ist, um auf einer gegengleich ausgebildeten Gegenauflagefläche des Dentalimplantats aufzuliegen. Dadurch wird verhindert, dass in montiertem Zustand Hohlräume vorliegen, in die die Abformmasse während der Abformung eindringen könnte.

Da die Auflagefläche des Dentalimplantats, und insbesondere des Referenzimplantats, für das die vorliegende Erfindung in erster Linie vorgesehen ist, in der Regel eine konische Schulterfläche als Gegenauflagefläche aufweist, ist die entsprechende Auflagefläche der Abformkappe vorzugsweise ebenfalls mindestens teilweise konisch ausgebildet.

Um einen möglichst innigen Formschluss zwischen der Abformkappe und der ausgehärteten Abformmasse zu gewährleisten, weist die Abformkappe aussenseitig bevorzugt eine Profilierung auf. Die Profilierung kann etwa in Form von radialen Vertiefungen oder Auskragungen vorgesehen sein.

Wie eingangs erwähnt eignet sich die Abformkappe insbesondere für das "Open tray"- und/oder "Closed tray"-Abformen von Referenzimplantaten, wie sie etwa für die Anfertigung von Bohrschablonen verwendet werden. Prinzipiell ist aber auch eine Verwendung für jedes andere Dentalimplantat denkbar.

Wird die erfindungsgemässe Abformkappe für die Abformung temporär eingesetzter Referenzimplantate verwendet, so kann auf die bei permanent eingesetzten, konventionellen Dentalimplantaten meist erforderliche Verdrehsicherung zwischen Abformkappe und Dentalimplantat in der Regel verzichtet werden. Die sich durch diese Verdrehsicherung oft ergebende Haftreibung zwischen Abformkappe und Dentalimplantat sowie die damit einhergehende, durch eine plastische Verformung der Abformmasse bedingte Ungenauigkeit bei der Übertragung auf das Negativmodell kann somit umgangen werden. Alternativ dazu kann aber auch eine Verdrehsicherung vorgesehen werden, sofern dies für die jeweiligen Zwecke erwünscht ist. Entsprechend kann mindestens einer der beiden Endbereiche der Abformkappe etwa einen polygonalen Sockel oder eine polygonale Öffnung aufweisen, welche(r) passgenau zur Öffnung bzw. zum Sockel im koronalen Endbereich des Dentalimplantats ausgestaltet ist.

Die Erfindung wird anhand der angefügten Figuren im Detail weiter beschrieben. Es zeigt:
- Fig. 1: eine perspektivische Ansicht einer erfindungsgemässen Abformkappe;
- Fig. 2: eine Seitenansicht einer weiteren erfindungsgemässen Abformkappe;
- Fig. 3: die Abformkappe gemäss Fig. 2 im Längsschnitt entlang der Linie III-III'; und
- Fig. 4: die Abformkappe gemäss Fig. 2 im Querschnitt entlang der Linie IV-IV'.

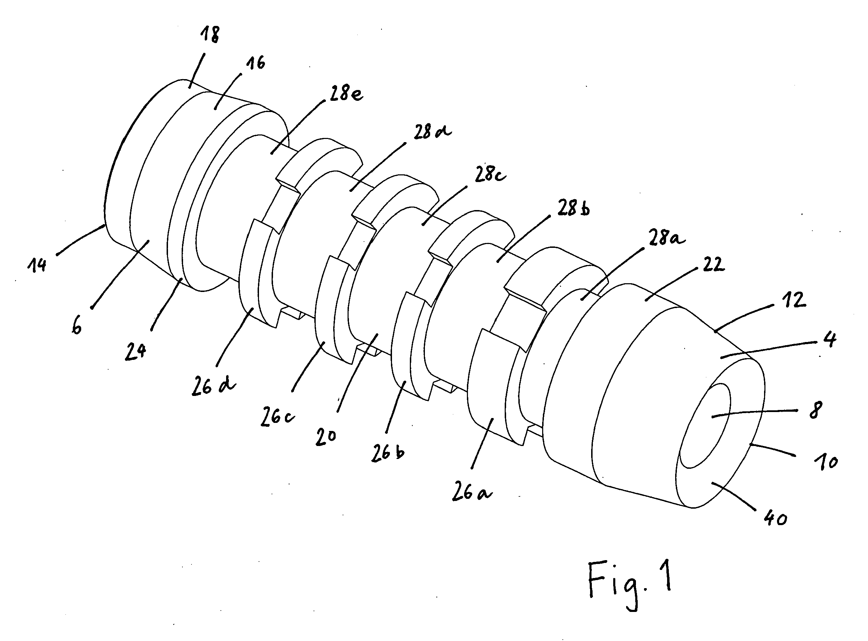

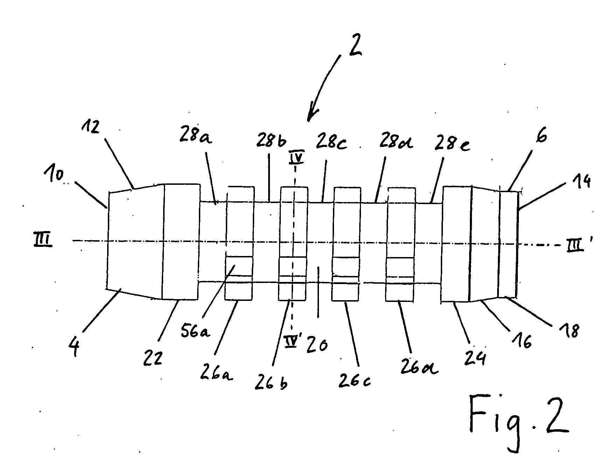

Wie in Fig. 1 und 2 gezeigt weist die Abformkappe 2 gemäss der vorliegenden Erfindung einen ersten Endbereich 4 und einen zweiten Endbereich 6 auf. Zwischen den Endbereichen erstreckt sich in Längsrichtung eine Ausnehmung 8.

Wie insbesondere aus Fig. 2 hervorgeht, ist der erste Endbereich 4 im Profil in Form eines sich in Richtung zum ersten Ende 10 hin verjüngenden Konus 12 ausgeformt, wobei in der gezeigten Darstellung der Konuswinkel ungefähr 10° beträgt. Der zweite Endbereich 6 ist im Profil in Form eines sich in Richtung zum zweiten Ende 14 hin verjüngenden Konus 16 ausgeformt, an den ein kreiszylinderförmiger Bereich 18 anschliesst. Der Konuswinkel des besagten Konus 16 beträgt in der gezeigten Darstellung ebenfalls ungefähr 10°.

Zwischen dem ersten Endbereich 4 und dem zweiten Endbereich 6 ist ein Mittelbereich 20 angeordnet, mit jeweils einem an die jeweiligen Endbereiche 4 bzw. 6 angrenzenden kreiszylinderförmigen Randsegment 22 bzw. 24 und vier dazwischen liegenden, in Längsrichtung gleichmässig beabstandeten Profilierungssegmenten 26a, 26b, 26c und 26d, die voneinander und von den Randsegmenten 22 bzw. 24 durch radiale Vertiefungen 28a, 28b, 28c, 28d und 28e getrennt sind. Die Abformkappe der Fig. 1 unterscheidet sich von derjenigen der Fig. 2 im Wesentlichen darin, dass das dem ersten Ende 10 zugewandte Profilierungssegment 26a in Längsrichtung breiter ausgestaltet ist als die übrigen Profilierungssegmente 26b, 26c, 26d. In der gemäss Fig. 2 gezeigten Ausführungsform sind diese alle im Wesentlichen gleich ausgestaltet.

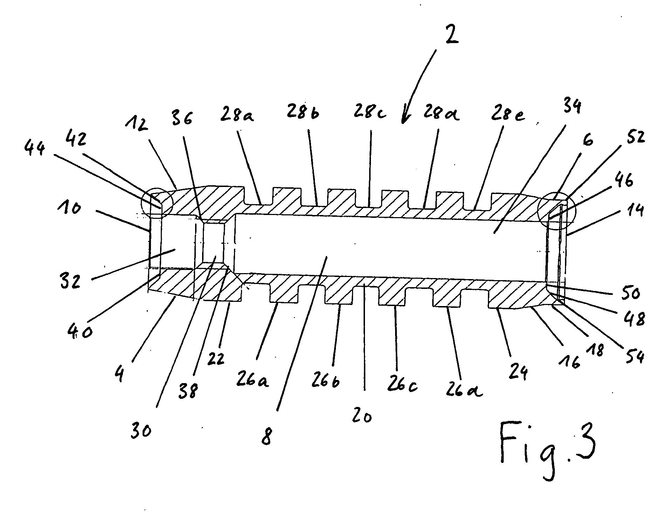

Wie insbesondere aus Fig. 3 ersichtlich ist, ist in der Ausnehmung 8 eine Einengung 30 ausgebildet, die zwischen einem ersten, sich bis zum ersten Ende 10 hin erstreckenden Ausnehmungsabschnitt 32 und einem zweiten, sich bis zum zweiten Ende 14 erstreckenden Ausnehmungsabschnitt 34 angeordnet ist. Besagte Ausnehmungsabschnitte 32, 34 sind im Wesentlichen kreiszylinderförmig ausgeformt und verjüngen sich zur ebenfalls kreiszylinderförmigen Einengung 30 hin konisch. Die sich dabei bildenden konischen Schulterflächen 36, 38 weisen in der gezeigten Darstellung einen Konuswinkel von ungefähr 45° auf.

Der erste Endbereich 4 weist innenseitig eine Auflagefläche 40 auf, die in Richtung vom ersten Ende 10 her einen ersten, konisch verlaufenden Flächenabschnitt 42 und einen daran anschliessen zweiten, rechtwinklig zur Längsrichtung der Abformkappe 2 verlaufenden Flächenabschnitt 44 umfasst.

Analog dazu weist auch der zweite Endbereich 6 innenseitig eine Auflagefläche 46 auf, die in Richtung vom zweiten Ende 14 her einen ersten, konisch verlaufenden Flächenabschnitt 48 und einen zweiten, rechtwinklig zur Längsrichtung der Abformkappe 2 verlaufenden Flächenabschnitt 50 umfasst. Peripher ist an der Auflagefläche 46 des zweiten Endbereichs 6 eine radial umlaufende Schnapplippe 52 angeformt, die im Querschnitt die Form eines nach Innen ragenden Wulstes aufweist. Dabei wird an der Grenze zwischen der Schnapplippe 52 und der Auflagefläche 46 eine Innenkante 54 gebildet, deren Innendurchmesser im Wesentlichen dem Aussendurchmesser der Schnappkante des Dentalimplantats entspricht.

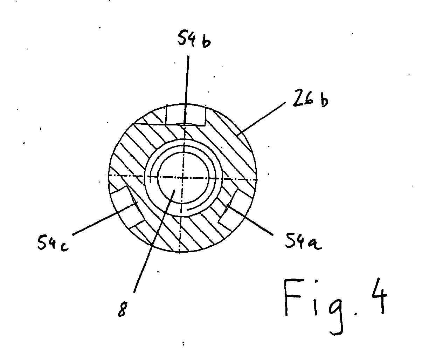

Wie insbesondere aus Fig. 4 ersichtlich ist, weisen in der gezeigten Ausführungsform die Profilierungssegmente 26a, 26b, 26c und 26d drei in Längsrichtung verlaufende Vertiefungen 56a, 56b und 56c auf, die in Umfangsrichtung gleichmässig angeordnet und somit um ca. 120° voneinander beabstandet sind.

Die dargestellte Abformkappe kann sowohl für eine "Open tray"- als auch für eine "Closed tray"-Abformung verwendet werden. Bei der "Open tray"-Abformung wird die Abformkappe 2 über den ersten Endbereich 4 mittels eines die Ausnehmung 8 mindestens teilweise durchgreifenden Befestigungselements (nicht gezeigt) mit einem Dentalimplantat (nicht gezeigt) verbunden. Dabei liegt die Auflagefläche 40 des ersten Endbereichs in der Regel auf einer gegengleich ausgebildeten Gegenauflagefläche des Dentalimplantats auf. In der Regel liegt das Befestigungselement in Form einer Schraube vor, die einen Schaftteil mit einem Aussengewindeabschnitt und einen Kopfteil mit einer Kerbung für einen Schraubenzieher umfasst. Der Kopfteil ist in seinem an den Schaftteil angrenzenden Bereich in der Regel konisch ausgestaltet und bildet somit eine zu der von der konischen Innenflächen 38 gebildeten Anschlagsfläche der Abformkappe 2 gegengleich ausgestaltete Gegenanschlagsfläche. Dies erlaubt es, die Abformkappe 2 mit möglichst wenig Spiel am Dentalimplantat zu befestigen bzw. die auf die Abformkappe wirkende Kraft grossflächig zu verteilen.

Bei der Abformung dringt die Abformmasse in die radialen Vertiefungen 28a-e zwischen den Profilierungssegmenten 26a-d bzw. in die Vertiefungen 56a-c der Profilierungssegmente 26a-d, wodurch ein möglichst inniger Formschluss zwischen der Abformmasse und der Abformkappe gewährleistet wird. Die Profilierung kann je nach zu erreichendem Ergebnis unterschiedlich ausgestaltet sein. Insbesondere ist etwa denkbar, die in den Figuren gezeigten radialen Vertiefungen 28a-e breiter auszugestalten unter entsprechend schmalerer Ausgestaltung der Profilierungssegmente 26a-d. Eine breitere Ausgestaltung der Vertiefungen erlaubt es, dass selbst bei relativ hoher Viskosität der Abformmasse diese in die Vertiefungen eindringen und somit nach dem Aushärten einen optimalen Formschluss gewährleisten kann.

Nach der Abformung wird die Schraubverbindung aufgehoben, indem die Schraube durch die Ausnehmung 8 etwa mittels eines Schraubenziehers gelöst wird.

Alternativ dazu wird beim "Closed tray"-Abformen die Abformkappe 2 auf das Dentalimplantat aufgesetzt, indem die Schnapplippe 52 soweit aufgeweitet wird, dass sie über eine Schnappkante des Dentalimplantats geschoben werden kann. Nach erfolgter Aushärtung wird die Abformmasse mit der darin eingebetteten Abformkappe 2 vom Dentalimplantat weggehoben. Dabei wird die Schnapplippe 52 wieder aufgeweitet und über die Schnappkante geschoben, wodurch die Schnappverbindung aufgehoben wird. Die Abformkappe 2 verbleibt somit in der ausgehärteten Abformmasse.

## Patentansprüche

1. Abformkappe für ein Dentalimplantat mit einer sich zwischen zwei Endbereichen (4, 6) der Abformkappe in Längsrichtung erstreckenden Ausnehmung (8), die derart ausgestaltet ist, dass sie ein Befestigungselement aufnehmen kann, welches dazu bestimmt ist, die Abformkappe über einen ersten der beiden Endbereiche (4) mit dem Dentalimplantat zu verbinden, **dadurch gekennzeichnet, dass** die Abformkappe an ihrem dem ersten Endbereich gegenüberliegenden zweiten Endbereich (6) ein Verbindungselement aufweist, welches derart ausgestaltet ist, um eine lösbare Schnappverbindung zwischen der Abformkappe und dem Dentalimplantat herzustellen und dass beide Endbereiche (4, 6) der Abformkappe eine Auflagefläche (40, 46) aufweisen, die derart ausgestaltet ist, um auf einer gegengleich ausgebildeten Gegenauflagefläche des Dentalimplantats aufzuliegen.

2. Abformkappe nach Anspruch 1, **dadurch gekennzeichnet, dass** das Verbindungselement eine elastisch verformbare Schnapplippe (52) umfasst.

3. Abformkappe nach Anspruch 2, **dadurch gekennzeichnet, dass** die Schnapplippe (52) derart ausgestaltet ist, um eine aussenseitige Schnappkante des Dentalimplantats zu hintergreifen.

4. Abformkappe nach Anspruch 2 oder 3, **dadurch gekennzeichnet, dass** die Schnapplippe (52) radial umlaufend ausgebildet ist.

5. Abformkappe nach einem der vorhergehenden Ansprüche, **dadurch gekennzeichnet, dass** sie eine Anschlagsfläche aufweist, die derart ausgestaltet ist, um mit einer Gegenanschlagsfläche des Befestigungselements zusammenzuwirken.

6. Abformkappe nach Anspruch 5, **dadurch gekennzeichnet, dass** die Anschlagsfläche von einer radial ins Innere der Ausnehmung (8) ragenden konischen Schulterfläche (38) gebildet wird.

7. Abformkappe nach einem der vorhergehenden Ansprüche, **dadurch gekennzeichnet, dass** die Abformkappe aussenseitig eine Profilierung aufweist.

8. Abformkappe nach einem der vorhergehenden Ansprüche, **dadurch gekennzeichnet, dass** mindestens einer der beiden Endbereiche (4, 6) eine zumindest teilweise konisch ausgebildete Auflagefläche (40 bzw. 46) aufweist, die derart ausgestaltet ist, um auf einer gegengleich ausgebildeten Gegenauflagefläche des Dentalimplantats aufzuliegen.

9. Abformkappe nach einem der vorhergehenden Ansprüche, **dadurch gekennzeichnet, dass** die Auflagefläche (40 bzw. 46) innenseitig ausgeformt ist.

10. Abformkappe nach einem der vorhergehenden Ansprüche, **gekennzeichnet durch** ein die Ausnehmung (8) mindestens teilweise durchgreifendes Befestigungselement.

11. Abformkappe nach Anspruch 10, **dadurch gekennzeichnet, dass** das Befestigungselement eine Schraube ist.

12. Abformkappe nach einem der vorhergehenden Ansprüche für ein Referenzimplantat.

13. Verwendung der Abformkappe nach einem der vorhergehenden Ansprüche für das "Open tray"- und/oder das "Closed tray"-Abformen eines Referenzimplantats.

## Claims

1. Impression cap for a dental implant, with a recess (8) extending in the longitudinal direction between two end areas (4, 6) of the impression cap, which recess is configured in such a way that it can receive a fastening element, which is intended to connect the impression cap to the dental implant via a first of the two end areas (4), **characterized in that** the impression cap, at its second end area (6) remote from the first end area, has a connection element that is configured in such a way as to produce a releasable snap-fit connection between the impression cap and the dental implant and **in that** both end areas (4, 6) of the impression cap have a bearing surface (40, 46), that is configured in such a way as to bear on a mating bearing surface of matching shape of the dental implant.

2. Impression cap as claimed in claim 1, **characterized in that** the connection element comprises an elastically deformable snap-fit lip (52).

3. Impression cap as claimed in claim 2, **characterized in that** the snap-fit lip (52) is configured in such a way as to engage behind a snap-fit edge on the outside of the dental implant.

4. Impression cap as claimed in claim 2 or 3, **characterized in that** the snap-fit lip (52) has a radially encircling configuration.

5. Impression cap as claimed in one of the preceding claims, **characterized in that** the impression cap has a contact surface configured in such a way as to cooperate with a mating contact surface of the fastening element.

6. Impression cap as claimed in claim 5, **characterized in that** the contact surface is formed by a conical shoulder surface (38) protruding radially into the interior of the recess (8).

7. Impression cap as claimed in one of the preceding claims, **characterized in that** the impression cap has a profiling on the outside thereof.

8. Impression cap as claimed in one of the preceding claims, **characterized in that** at least one of the two end areas (4, 6) has an at least partially conical bearing surface (40 resp. 46), which is configured in such a way as to bear on a mating bearing surface of matching shape of the dental implant.

9. Impression cap as claimed in one of the preceding claims, **characterized in that** the bearing surface (40 resp. 46) is formed on the inside.

10. Impression cap as claimed in one of the preceding claims, **characterized by** a fastening element engaging at least partially through the recess (8).

11. Impression cap as claimed in claim 10, **characterized in that** the fastening element is a screw.

12. Impression cap as claimed in one of the preceding claims for a reference implant.

13. Use of the impression cap as claimed in one of the preceding claims for taking open-tray and/or closed-tray impressions of a reference implant.

## Revendications

1. Coiffe d'empreinte pour un implant dentaire avec une cavité (8) s'étendant dans le sens de la longueur entre deux zones d'extrémité (4, 6) de la coiffe d'empreinte, qui est formée de telle sorte qu'elle peut recevoir un élément de fixation qui est prévu pour connecter la coiffe d'empreinte à l'implant dentaire au moyen d'une première des deux zones d'extrémité (4), **caractérisée en ce que** la coiffe d'empreinte, à sa seconde zone d'extrémité (6) éloignée de la première zone d'extrémité, présente un élément de connexion qui est formé de façon à produire une connexion amovible par encliquetage entre la coiffe d'empreinte et l'implant dentaire et **en ce que** les deux zones d'extrémité (4, 6) de la coiffe d'empreinte ont une surface d'appui (40, 46) qui est formée de façon à s'appuyer sur une surface d'appui correspondante identique et opposée de l'implant dentaire.

2. Coiffe d'empreinte selon la revendication 1, **caractérisée en ce que** l'élément de connexion comprend une lèvre enclipsable (52) déformable élastiquement.

3. Coiffe d'empreinte selon la revendication 2, **caractérisée en ce que** la lèvre enclipsable (52) est formée de façon à venir en prise derrière un bord enclipsable à l'extérieur de l'implant dentaire.

4. Coiffe d'empreinte selon la revendication 2 ou 3, **caractérisée en ce que** la lèvre enclipsable (52) est formée circonférentiellement de façon radiale.

5. Coiffe d'empreinte selon l'une des revendications précédentes, **caractérisée en ce que** la coiffe d'empreinte présente une surface de butée formée de façon à coopérer avec une surface de butée correspondante de l'élément de fixation.

6. Coiffe d'empreinte selon la revendication 5, **caractérisée en ce que** la surface de butée est formée par une surface d'épaulement (38) conique dépassant radialement dans l'intérieur de la cavité (8).

7. Coiffe d'empreinte selon l'une des revendications précédentes, **caractérisée en ce que** la coiffe d'empreinte présente un profilage à l'extérieur.

8. Coiffe d'empreinte selon l'une des revendications précédentes, **caractérisée en ce qu'**au moins une des deux zones d'extrémité (4, 6) présente une surface d'appui (40 resp. 46) au moins partiellement conique, qui est formée de façon à s'appuyer sur une surface d'appui correspondante identique et opposée de l'implant dentaire.

9. Coiffe d'empreinte selon l'une des revendications précédentes, **caractérisée en ce que** la surface d'appui (40 resp. 46) est formée à l'intérieur.

10. Coiffe d'empreinte selon l'une des revendications précédentes, **caractérisée par** un élément de fixation s'engageant au moins partiellement à travers la cavité (8).

11. Coiffe d'empreinte selon la revendication 10, **caractérisée en ce que** l'élément de fixation est une vis.

12. Coiffe d'empreinte selon l'une des revendications précédentes pour un implant de référence.

13. Utilisation de la coiffe d'empreinte selon l'une des revendications précédentes pour la prise d'empreinte selon la méthode « open-tray » et/ou « closed-tray » pour un implant de référence.
